# FASCICULE DE BREVET EUROPEEN

(11) **EP 2 501 888 B1**
(45) Date de publication et mention de la délivrance du brevet: **03.05.2017**
(21) Numéro de dépôt: 10784474.8
(22) Date de dépôt: 17.11.2010
(51) Int. Cl.: E06B 3/673

(54) **PROCÉDÉ DE FABRICATION D'UN VITRAGE ISOLANT**
HERSTELLUNGSVERFAHREN EINER ISOLIERVERGLASUNG
PRODUCTION METHOD FOR INSULATION GLAZING

(30) Priorité: 18.11.2009 BE 200900707; 01.02.2010 BE 201000050
(43) Date de publication de la demande: 26.09.2012
(73) Titulaire: AGC Glass Europe, 1348 Louvain-la-Neuve (BE)
(72) Inventeur: BOUESNARD, Olivier, B-6040 Jumet (BE); CLOSSET, François, B-6040 Jumet (BE)
(74) Mandataire: Bayot, Daisy
(86) Numéro de dépôt international: PCT/EP2010/067633
(87) Numéro de publication internationale: WO 2011/061208

(56) Documents cités:
- US-A- 5 227 206
- US-A1- 2001 001 042

## Description

### Domaine technique de l'invention

La présente invention se rapporte à un procédé de fabrication d'un vitrage isolant thermiquement tel qu'un vitrage sous vide. La présenté invention se rapporte également au vitrage ainsi obtenu.

### Arrière-plan de l'invention

D'une manière générale, un vitrage sous vide se compose d'un minimum de deux panneaux de verre séparés par un espace de vide d'une épaisseur comprise entre 100µm et 800µm. L'étanchéité est obtenue par un joint périphérique étanche. Pour obtenir des performances de super isolation (coefficient de transmission surfacique U<0.6w/m²K), le niveau de vide entre les panneaux de verres doit être de l'ordre de 10⁻³mbar ou inférieur, et généralement au moins un des deux panneaux de verres doit être recouvert par une couche basse-émissivité ayant une émissivité idéalement inférieure à 0,05.

Différentes technologies de joints existent, chacune présentant certains inconvénients. Un premier type de joint (le plus répandu) est un joint à base d'un verre à souder dont la température de fusion est inférieure à celle du verre des panneaux de verre du vitrage. La mise en oeuvre de ce type de joint limite le choix des couches basse-émissivités à celles qui ne sont pas altérées par le cycle thermique nécessaire à la mise en oeuvre du verre à souder, c'est à dire à celle qui résiste à une température pouvant aller jusqu'à 350°C. De plus, ce type de joint à base de verre à souder n'étant que très peu déformable, il ne permet pas de reprendre les effets des dilatations différentielles entre le panneau de verre du vitrage coté intérieur et le panneau de verre du vitrage coté extérieur lorsque ceux-ci sont soumis à de grandes différences de température (par exemple 40°C). Des contraintes assez importantes sont alors induites à la périphérie du vitrage et peuvent entraîner des casses des panneaux de verre du vitrage.

Un second type de joint comprend un joint métallique, par exemple un feuillard métallique d'une épaisseur mince (<500µm) soudé en périphérie du vitrage par l'intermédiaire d'une sous-couche d'accrochage recouverte au moins partiellement par une couche d'un matériau brasable de type soudure tendre d'alliage d'étain. Un avantage important de ce second type de joint par rapport au premier type de joint est qu'il peut se déformer pour reprendre les dilatations différentielles créées entre les deux panneaux de verre. Il existe différents types de sous-couches d'accrochage sur le panneau de verre.

La demande de brevet (WO2006/121954) présente un premier exemple de réalisation d'un joint du second type pour vitrage sous vide. Selon cet exemple, la couche d'adhésion est déposée sur le premier panneau de verre par différents procédés (dépôt physique en phase vapeur (PVD : « Physical Vapor Deposition »), dépôt chimique en phase vapeur (CVD : « Chemical Vapor deposition ») et projection à froid). L'inconvénient majeur des dépôts CVD ou PVD est qu'ils sont relativement onéreux et complexes à mettre en oeuvre.

De son côté le dépôt par projection à froid est également onéreux et complexe à réaliser et peut en outre endommager le substrat en verre sur lequel il est réalisé. En effet, un tel dépôt peut entraîner des fissures sur le substrat en verre conduisant à des fuites et une perte du niveau de vide à l'intérieur du vitrage, ne permettant pas de maintenir un niveau de vide suffisamment bas (∼10⁻³mbar) pendant la durée du vitrage sous vide (généralement au minimum 10ans).

Le brevet (U.S. Pat. N°5,227,206; cf. colonne 1 lignes 60-65) présente un second exemple de réalisation d'un joint du second type pour vitrage sous vide. Selon cet exemple, la couche adhésion est une couche de cuivre déposée par un procédé de projection à la flamme basse vitesse. Le principal inconvénient de cette sous-couche est sa porosité (US5227206; cf. paragraphe entre les colonnes 1 et 2). Ce type de dépôt ne permet pas d'obtenir une étanchéité suffisante au maintient d'un niveau de vide suffisant bas (∼10⁻³mbar) pendant la durée de vie du vitrage sous vide (généralement au minimum 10 ans).

### Résumé de l'invention

Un aspect de la présente invention propose de mettre en oeuvre, dans un joint d'étanchéité de type métallique, e.g. un feuillard métallique, pour vitrage isolant (c'est à dire pour double ou triple vitrage, par exemple pour vitrage sous vide), une couche d'adhésion déposée grâce au procédé HVOF (« high velocity oxy/fuel spraying » ou «projection thermique oxy-carburant haute vitesse » en français). En effet, il a été observé d'une manière surprenante qu'une telle technique de dépôt permet d'obtenir une couche d'adhésion présentant une densité de matière suffisante pour garantir une étanchéité suffisante au maintient d'un niveau de vide suffisant (<10⁻³mbar) sur la durée de vie classique des vitrages sous vide (10 ans). Un avantage de certains modes de réalisation de la présente invention est une bonne adhésion au panneau en verre. Un autre avantage de certains modes de réalisation de la présente invention est que le dépôt se fait sans endommager le panneau en verre. Un autre avantage de certains modes de réalisation de la présente invention est qu'ils s'opèrent de manière simple à coûts raisonnables (par exemple, inférieur en coût et en complexité aux dépôts CVD et PVD).

Un autre avantage de certains modes de réalisation de la présente invention est qu'ils permettent d'obtenir des densités plus importantes que celle obtenues par des procédés standards de projection à la flamme. Les dites densités sont comparables à celle du métal projeté. Malgré l'énergie importante fournie aux particules de métal par la combinaison de la combustion et de la haute vitesse de projection (super sonique), il a été observé que, dé manière surprenante, le substrat n'est pas endommagé par le dépôt (pas de fissure observée lors d'analyse au microscope optique).

La pression à l'intérieur d'un vitrage sous vide est préférentiellement inférieure à 10⁻³mbar pour que celui-ci conserve ses propriétés de super-isolation énergétique pendant un temps utile. En conséquence, la remontée en pression acceptable durant la vie du produit est préférentiellement au maximum du même ordre de grandeur. Certains mode de réalisation de la présente invention rendent possible de garder un vide inférieur à 10⁻⁴ à 10⁻³ mbars à l'intérieur d'un vitrage pendant 10 ans.

Dans un premier aspect, la présente invention se rapporte à un procédé de fabrication d'au moins une partie d'un joint d'étanchéité assurant l'étanchéité au gaz entre au moins un premier et un second panneau de verre dans un vitrage, le procédé comprenant les étapes suivantes :
dépôt d'une première couche d'adhésion sur une première zone périphérique du premier panneau et d'une seconde couche d'adhésion sur une seconde zone périphérique du second panneau ;
soudure d'un premier élément de joint métallique à la première couche d'adhésion ; et
soudure d'un second élément de joint métallique ou dudit premier élément de joint métallique à la seconde couche d'adhésion ;
dans laquelle les dépôts des première et seconde couche d'adhésion sont réalisés avec un procédé de type HVOF (projection à flamme oxygène-carburant à haute vitesse).
Dans le cas d'un vitrage sous vide, le vide peut être réalisé dans la cavité étanche délimitée par le joint d'étanchéité, au moyen, par exemple, d'un système d'aspiration adéquat connecté à la cavité,

Dans des modes de réalisations du procédé de fabrication selon l'invention, le procédé peut en outre comprendre une étape de dépôt sur au moins une partie d'au moins une des couches d'adhésion, d'une couche de soudure métallique. Dans des modes de réalisations du procédé de fabrication selon l'invention, au moins une des soudures d'élément de joint est une soudure par fusion de ladite couche de soudure métallique. La présence d'une couche de soudure métallique facilite le soudage.

Dans des modes de réalisations dudit procédé de fabrication selon l'invention, au moins une desdites étapes de soudure peut être une soudure par ultrason ou par induction. La soudure par ultrason à l'avantage de ne pas obligatoirement nécessiter de couche de soudure métallique.

Dans des modes de réalisations dudit procédé de fabrication selon l'invention, un desdits panneaux de verre peut être muni d'une couche d'isolation thermique. Ceci permet de rendre le vitrage encore plus isolant.

Dans des modes de réalisations dudit procédé de fabrication selon l'invention, lé vitrage peut être un vitrage sous vide. Ceci permet de rendre le vitrage super isolant (U<0.6w/m²K).

Dans des modes de réalisations dudit procédé de fabrication selon l'invention, la soudure d'un premier élément de joint métallique à la première couche d'adhésion et la soudure d'un second élément de joint métallique à la seconde couche d'adhésion peut être réalisée, le procédé de fabrication peut en outre comprendre la soudure du premier élément de joint avec le second élément de joint. Ceci permet d'effectuer les étapes de soudure du premier et du second élément de joint dans une atmosphère à pression atmosphérique. Seul la dernière étape de soudure des éléments de joint entre eux doit alors se faire sous vide afin d'obtenir un vitrage sous vide.

Dans des modes de réalisations dudit procédé de fabrication selon l'invention, les dites zones périphériques peuvent être chauffées à une température de 150°C ou plus, préférablement 200°C ou plus, plus préférablement 250°C ou plus avant le dépôt desdites couches d'adhésion. Ceci permet d'améliorer l'adhésion de la couche d'adhésion au panneau de verre.

Dans des modes de réalisations dudit procédé de fabrication selon l'invention, lesdites couches d'adhésion peuvent avoir une épaisseur de 1 à 100 µm, préférablement de 1 à 30 µm, plus préférablement de 5 à 15 µm. De telles épaisseurs empêchent la couche de peler tout en permettant suffisamment d'épaisseur pour permettre à la couche de remplir ses fonctions.

Avantageusement,, lesdites couches d'adhésion peuvent avoir une rugosité Ra de 1 à 5 µm, préférablement de 2 à 3 µm. Ceci permet une bonne adhésion de la couche de soudure métallique sur la couche d'adhésion.

Avantageusement, au moins une des couches d'adhésion peut être explosée à une flamme réductrice avant d'être soumise à ladite soudure. Ceci permet de réduire la création d'oxyde et ainsi d'améliorer la mouillabilité du dépôt pour les opérations postérieures

Avantageusement, lesdites couches d'adhésion peuvent être formées d'un matériau d'adhésion sélectionné dans le groupe composé du cuivre et de ses alliages, de l'aluminium et de ses alliages, du fer et de ses alliages, du platine et de ses alliages, du nickel et de ses alliages, de l'or et de ses alliages, de l'argent et de ses alliages, du titane et de ses alliages et de l'étain ou de ses alliages.

Dans une mise en oeuvre conforme à l'invention, lesdites couches d'adhésion peuvent être formées d'un matériau d'adhésion ayant un coefficient de dilatation thermique de 3 à 23.10⁻⁶ K⁻¹, préférablement de 4 à 18.10⁻⁶ K⁻¹, plus préférablement de 5 à 16.10⁻⁶ K⁻¹. Ceci permet d'éviter des problèmes de dilatation différentielle entre le panneau de verre et le matériau d'adhésion.

Avantageusement, le procédé de fabrication peut eh outre comprendre une étape d'exposition d'au moins une desdites couches d'adhésion à un flux de brasage avant ladite soudure et/ou avant ledit dépôt d'une couche de soudure métallique. Ceci permet de dissoudre les oxydes présents à la surface. Par exemple, dans le cas d'une couche d'adhésion réalisée en cuivre, le flux utilisé peut être un flux commercialisé par la société Castolin sous la référence 157NC.

Avantageusement, le procédé de fabrication peut en outre comprendre une étape de nettoyage du surplus de flux de brasage après ladite soudure et/ou après ledit dépôt d'une couche de soudure métallique. Ceci évite la dégradation du joint et limite le dégazage après mise sous vide.

Avantageusement, au moins un desdits éléments de joint métallique peut avoir une couche de soudure métallique préexistant ladite soudure à une desdites couches d'adhésion. Ceci facilite le brasage.

Dans des modes de réalisations du procédé de fabrication selon l'invention, les étapes suivantes peuvent être mises en oeuvre :
dépôt dans une atmosphère à pression atmosphérique d'une première couche d'adhésion sur une première zone périphérique du premier panneau et d'une seconde couche d'adhésion sur une seconde zone périphérique du second panneau ;
soudure dans une atmosphère à pression atmosphérique d'un premier élément de joint métallique à la première couche d'adhésion ;
soudure dans une atmosphère à pression atmosphérique d'un second élément de joint métallique, distinct du premier élément de joint métallique, à la seconde couche d'adhésion ; et
soudure dans une atmosphère à pression réduite et préférablement sous vide du premier élément de joint métallique avec le second élément de joint métallique.

Ceci est économiquement avantageux en comparaison avec un procédé entièrement réalisée sous vide.

Avantageusement, lesdits éléments de joint métalliques peuvent comprendre au moins un matériau sélectionné parmi le cuivre et ses alliages, l'aluminium et ses alliages, le fer et ses alliages.

Dans des modes de réalisations dudit procédé de fabrication, lesdits éléments de joint métalliques et/ou le matériau d'adhésion peuvent être en un alliage de fer comprenant les métaux suivant : Fer (53-55%wt, par exemple 53.5%wt), Nickel (28-30%, par exemple 29%wt) et Cobalt (16-18%, par exemple 17%wt) tel que le Kovar®. Ceci est avantageux car ce type d'alliage à un coefficient de dilatation thermique proche du verre.

Dans d'autres modes de réalisations dudit procédé de fabrication, lesdits éléments de joint métalliques et/ou le matériau d'adhésion peuvent être en un alliage de fer comprenant les métaux suivant : Fer (50-55%wt, par exemple 52%wt), Nickel (45-50%, par exemple 48%wt) tel que l'alliage 48. Ceci est avantageux car ce type d'alliage à un coefficient de dilatation thermique proche du verre.

Avantageusement, l'épaisseur des éléments de joint est comprise entre 50µm et 1000µm ; de préférence entre 100µm et 500µm ; de préférence entre 150µm et 300µm. On peut par exemple utiliser une épaisseur de 200µm.

Avantageusement, ledit procédé de type projection à flamme oxygène-carburant à haute vitesse peut comprendre les étapes suivantes :
- dans un appareil de projection comprenant des première, seconde et troisième entrées, chacune conduisant à une chambre de combustion, et une sortie, injecter sous pression un combustible (par exemple du kérosène ou du propylène) et de l'oxygène par ladite première entrée,
- injecter le matériau d'adhésion dans ladite deuxième entrée ;
- réaliser une combustion (l'allumage de la combustion peut être réalisé de manière automatique ou manuelle avec une étincelle ou une flamme)) entre ledit combustible et ledit oxygène pour faire fondre le matériau d'adhésion dans la chambre de combustion,
- injecter un gaz sous pression (par exemple de l'air comprimé, de l'argon, ...) par ladite troisième entrée afin de pouvoir projeter avec une vitesse supersonique ledit matériau d'adhésion fondu hors dudit appareil via ladite sortie ; et,
- orienter la sortie dudit appareil vers l'une desdites zone périphérique, permettant ainsi la formation de l'une desdites couches d'adhésion.

De manière avantageuse, l'angle entre l'axe de ladite sortie et ledit panneau de verre peut être de 45° à 90 °, préférablement de 70° à 90°, plus préférablement de 75° à 90° et encore plus préférablement de 80 à 90°.

Par exemple, un angle de 90° permet d'obtenir un dépôt plus dense, alors qu'avec un angle de 45°, le dépôt sera plus rugueux (et le masquage sera aussi plus efficace).

Dans des modes de réalisationsde l'invention, la distance mesurée dans le prolongement de l'axe de la dite sortie entre ladite sortie et le panneau de verre peut être de 10 à 30 cm, préférablement de 15 à 25 cm, plus préférablement de 17 à 23 cm.

Ainsi, il est avantageux de prévoir une distance suffisante pour éviter de fournir trop d'énergie au verre (ce qui risque de conduire à sa casse, et à la suroxydation du dépôt) et pour obtenir une zone métallisée assez large.

Dans des modes de réalisations de l'invention, ledit appareil et le panneau de verre peuvent être déplacés l'un par rapport à l'autre pendant la formation desdites couches d'adhésion à une vitesse dé 5 à 30 m/min, préférablement à une vitesse de 5 à 20 m/min, plus préférablement à une vitesse de 5 à 15 m/min et encore plus préférablement à une vitesse de 7 à 13 m/min.

Ainsi, de telles vitesses sont compatible avec un convoyage de verre et permettent de maintenir une bonne épaisseur de couche d'adhésion.

Avantageusement, la pression de l'oxygène peut être de 4 à 10 bars, préférablement de 5 à 9 bars, plus préférablement de 6 à 8 bars.

Ainsi, de telles pressions permettent de réaliser correctement les mélanges de combustion et d'atteindre les vitesses supersoniques.

Avantageusement, ledit combustible peut être sélectionné dans le groupe formé du méthane, de l'éthane, du propane, du butane, du gaz naturel, du propylène, de l'hydrogène, du kérosène ou de l'acétylène.

Avantageusement, ledit combustible peut être du propylène.

Avantageusement, la pression dudit combustible peut être de 2 à 10 bars, préférablement de 3 à 8 bars, plus préférablement de 4 à 6 bars.

Avantageusement, ledit air comprimé peut être injecté avec une pression de 2 à 10 bars, préférablement de 3 à 9 bars, plus préférablement de 4 à 8 bars et le plus préférablement de 5 à 7 bars.

Avantageusement, le matériau d'adhésion peut être injecté dans un gaz porteur et la pression du dit gaz porteur est de 2 à 8 bars, préférablement de 2 à 6 bars et plus préférablement de 3 à 5 bars.

Un autre aspect de la présente invention concerne un vitrage obtenu par n'importe quel mode de réalisation du procédé de fabrication selon la présente invention.

### Brève description des figures

Fig. 1 montre un schéma illustrant l'étape de projection à flamme oxygène-carburant à haute vitesse selon un mode de réalisation de la présente invention.
Fig. 2 montre un schéma illustrant un triple vitrage obtenu via un mode de réalisation d'un procédé selon la présente invention.
Fig. 3 montre en perspective le schéma d'un double vitrage obtenu via un mode de réalisation d'un procédé selon la présente invention.
Fig. 4 montre un schéma illustrant un double vitrage obtenu via un mode de réalisation d'un procédé selon la présente invention.
Fig. 5 illustre un procédé de fabrication d'un joint d'étanchéité selon un mode de réalisation de la présente invention.
Fig. 6 montre le schéma d'un vitrage obtenu selon un mode de réalisation d'un procédé de fabrication d'un joint d'étanchéité selon la présente invention.
Fig. 7 montre les schémas de deux vitrages obtenus selon deux modes différents de réalisation d'un procédé de fabrication d'un joint d'étanchéité selon la présente invention.
Fig. 8 illustre un mode de réalisation d'un procédé de fabrication d'un joint d'étanchéité selon la présente invention.

### Description de l'invention

La présente invention va être décrite en faisant référence à des modes de réalisation particuliers et en faisant référence à certains dessins mais l'invention n'est pas limitée par cela et n'est limitée que par les revendications. Dans les dessins, la taille et les dimensions relatives de certains éléments peuvent être exagérés et ne pas être dessinés à l'échelle pour des raisons d'illustration.

De plus les termes premier, second, troisième et similaire dans la description et dans les revendications sont utilisés pour distinguer entre des éléments similaires et non pas nécessairement pour décrire une séquence qu'elle soit temporelle, spatiale, à des fins de classement ou autre. Il est bien entendu que les termes ainsi utilisés sont interchangeables dans des circonstances appropriées et que les modes de réalisations de l'invention décrits ici sont capables d'opérer dans d'autres séquences que celles décrites ou illustrées ici.

De plus, les termes haut, bas, au-dessus, en-dessous et similaire dans la description et les revendications sont utilisés pour des raisons de description et non pas nécessairement pour décrire des positions relatives. Il est bien entendu que les termes ainsi utilisés sont interchangeables dans des circonstances appropriées et que les modes de réalisation de l'invention décrits ici sont capables d'être opéré dans d'autres orientations que celles décrites ou illustrées ici.

Il est à remarquer que le terme "comprenant", utilisé dans les revendications, ne doit pas être interprété comme étant restreint aux moyens listés après celui-ci; il n'exclue pas d'autres éléments ou étapes. Il doit donc être interprété comme spécifiant la présence des éléments spécifiés, entiers, étapes ou composants référés, mais n'exclue pas la présence ou l'addition d'un élément, entier, étape ou composant, ou groupe de ceux-ci. Donc l'étendue de l'expression "un appareil comprenant les moyens A et B" ne doit pas être limité à des appareils consistant seulement des composants A et B. Cela veut dire qu'en ce qui concerne la présente invention, les seuls composants relevants de l'appareil sont A et B.

Tel qu'utilisé ici et à moins d'indications contraires, par « au moins une partie », il est entendu que si le premier et le second élément de joints ne sont pas un seul et même élément de joint, le procédé résulte en un intermédiaire, c'est à dire une partie de joint qui n'assurera sa fonction de joint qu'après soudure ensemble desdits premier et second élément de joint dudit joint.

Tel qu'utilisé ici et à moins d'indications contraires, par « étanchéité au gaz », il est entendu l'étanchéité à tout gaz qui pourrait être utilisé dans un double vitrage pour amélioré l'isolation (par exemple l'argon) ou l'étanchéité à l'air ou tout autre gaz présent dans l'atmosphère (dans le cas d'un vitrage sous-vide).

Tel qu'utilisé ici et à moins d'indications contraires, par « couche d'isolation thermique » il est entendu une couche d'oxyde métallique ayant une émissivité inférieure à 0.2, préférentiellement inférieure à 0.1 et plus préférentiellement inférieure à 0.05. Une des couches d'adhésion peut être déposée sur une couche d'isolation thermique (préalablement déposée sur un des panneaux de verre) qui peut être par exemple l'une des couches suivantes : planibel G, planibel top N et top NT commercialisées par la société AGC.

Tel qu'utilisé ici et à moins d'indications contraires le terme « flamme réductrice » se rapporte à une flamme obtenue lorsqu'il n'y a pas suffisamment d'oxygène pour brûler (i.e. casser toute la molécule et en oxyder tout son hydrogène et son carbone) tout le combustible (e.g. propylène ou tout autre combustible).

Tel qu'utilisé ici et à moins d'indications contraires le terme « espaceur » se rapporte à un ou plusieurs éléments assurant une distance relativement constante entre deux panneaux de verre adjacent.

Le procédé HVOF est une technique de projection thermique où l'on recouvre un substrat par une matière projetée (ici un matériau d'adhésion) par un appareil de projection. Une des particularités de ce mode de projection est la vitesse relativement élevée des particules projetées. L'appareil de projection est généralement appelé « pistolet de projection ».

L'énergie nécessaire à la fusion et pour partie (car le gaz injecté sous pression participe également à l'accélération) à l'accélération des particules dudit matériau d'adhésion est obtenue lors de la combustion d'un combustible par de l'oxygène. Des exemples de combustible adéquat sont le méthane, l'éthane, le propane, le butane, le gaz naturel, le propylène, l'hydrogène, le kérosène ou l'acétylène parmi d'autres. De préférence, le propylène est utilisé.

Dans un mode de réalisation de la présente invention, le combustible et l'oxygène sont tous deux injectés dans l'appareil de projection sous haute pression. La flamme est en plus accélérée par une alimentation en gaz comprimé (Argon, air...) et dirigée dans une buse d'injection faisant partie de l'appareil de projection pour atteindre une vitesse supersonique en sortie de buse. La poudre du matériau d'adhésion à projeter est elle injectée axialement dans le l'appareil de projection.

Les couches produites par ce type de procédé sont très denses et résistantes.

Dans un mode de réalisation de la présente invention, la zone périphérique du panneau de verre où la couche d'adhésion est déposée peut tout d'abord être préchauffée à une température supérieure à 150°C, de préférence supérieure à 200°C et encore plus préférentiellement supérieure à 250°C. L'utilisation d'une préchauffe améliore l'adhésion au panneau de verre. La préchauffe peut être réalisée par tout moyen connu de l'homme de l'art tel que par exemple à l'aide d'une flammé ou de lampe infrarouges.

La couche d'adhésion est déposée sur la périphérie de chacun des panneaux de verre sur une piste d'une largeur de plusieurs millimètres, par exemple entre 1 et 15mm.

Pour le dépôt de la couche d'adhésion, par exemple, soit le panneau de verre est convoyé en dessous d'un appareil de projection côté après côté, soit l'appareil de projection est mobile et le panneau de verre est fixe, soit le panneau de verre est convoyé en dessous de appareil de projection qui est lui-même mobile.

L'appareil de projection utilisé peut être un appareil de projection HVOF à poudre (tel que celui commercialisé par la société GMA sous la référence commerciale "Microjet™"). Il peut être équipé d'une des buses suivantes, commercialisées par la société AIRCAP Microjet - Metallizing Equipment CO. PVT. LTD :
- la buse de référence HP-3-A (en aluminium et de diamètre 8.4 mm) ;
- la buse de référence HP-3-B (en aluminium et de diamètre 9.4 mm) ;
- la buse de référence HP-3-C (en cuivre et de diamètre 9.5 mm).

Par exemple, on utilise la buse HP-3-C, qui est une buse ouverte et courte idéale pour la projection de métaux à bas point de fusion.

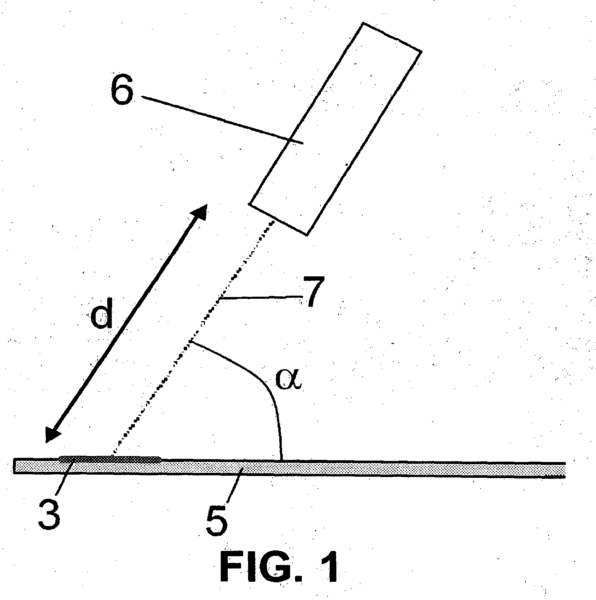

Fig. 1 montre un appareil de projection 6 projetant un jet 7 contenant un matériau d'adhésion. La projection est effectuée sur une zone périphérique d'un panneau de verre 5, formant ainsi une couche d'adhésion 3. Le jet 7 et le panneau de verre 5 forment un angle α. La distance mesurée dans le prolongement de l'axe de la sortie de l'appareil de projection 6 entre ladite sortie et le panneau de verre est indiquée par la lettre d.

Pour obtenir une couche d'adhésion fonctionnelle pour un joint de vitrage isolant (par exemple sous vide) les paramètres de dépôt suivant sont utilisé préférentiellement : en ce qui concerne les paramètres géométriques (voir Fig.1), l'angle α entre l'axe de la sortie de l'appareil de projection 6 et le panneau de verre 5 peut être de 45 à 90°, préférablement de 70° à 90°, plus préférablement de 75° à 90° et idéalement de 80° à 90°. La distance d mesurée dans le prolongement de l'axe de la dite sortie entre ladite sortie (la buselure) de l'appareil de projection 6 et la surface du panneau de verre 5 peut être de 10 à 30 cm, préférablement de 15 à 25 cm, plus préférablement de 17 à 23 cm et idéalement aux alentours de 20cm. La vitesse relative entré le panneau de verre 5 et l'appareil de projection 6 peut être de 5 à 30m/min, préférablement de 5 à 20 m/min, plus préférablement de 5 à 15 m/min et encore plus préférablement de 7 à 13 m/min, et idéalement aux alentours de 10m/min.

Pour les paramètres de flamme, la pression d'oxygène peut être de 4 à 10 bars, préférablement de 5 à 9 bars, plus préférablement de 6 à 8 bars et idéalement aux alentours de 7 bars. Le combustible préféré est le propylène. La pression du combustible est de préférence de 2 à 10 bars, préférablement de 3 à 8 bars, plus préférablement de 4 à 6 bars et idéalement aux alentours de 5 bars. L'air comprimé peut être injecté avec une pression située entre 2 et 10 bars, préférablement de 3 à 9 bars, plus préférablement de 4 à 8 bars et le plus préférablement de 5 à 7 bars et idéalement aux alentours de 6 bars. La poudre est injectée avec un gaz porteur (par exemple dé l'Argon) ; la pression de celui-ci peut être par exemple entre 2 et 8 bars, préférablement de 2 à 6 bars, plus préférablement de 3 à 5 bars et idéalement aux alentours de 4 bars.

L'épaisseur moyenne des couches d'adhésion 3 déposées est de préférence de 1 à 100 µm, préférablement dé 1 à 30 µm, plus préférablement de 5 à 15 µm.

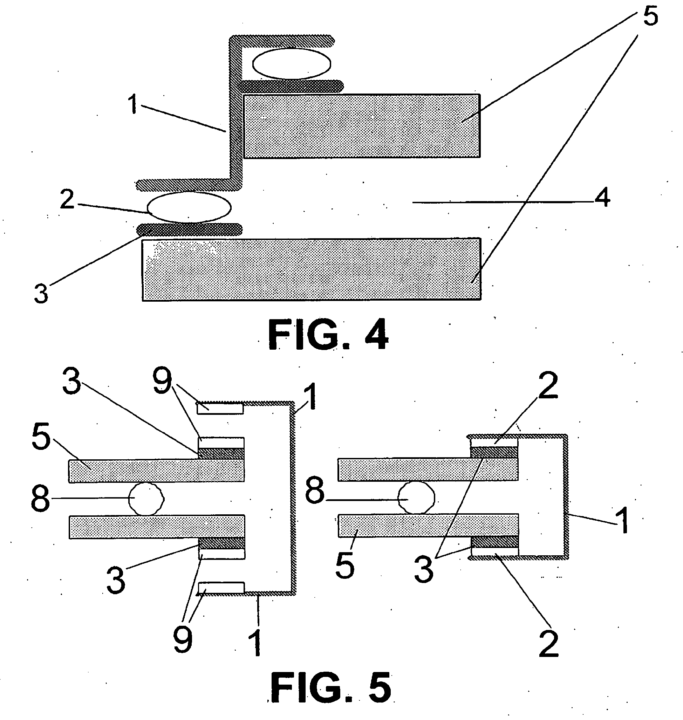

Idéalement l'épaisseur moyenne se situe entre 5 à 15µm (mesures réalisées par un profilomètre commercialisé par la société Veeco sous la référence commerciale « DekTak® 6M »). Si les dépôts 3 sont trop épais, la couche 3 peut peler au moment du dépôt. Un autre paramètre de la couche d'adhésion 3 déposée est sa rugosité. Sa rugosité est préférablement telle que pour permettre une bonne adhésion dé la couche d'étamage optionnelle 9 (see Fig. 5). La rugosité (Ra) obtenue mesurée par rugosimètre de type Talysurf™ se situe préférentiellement entre 1 et 5 µm, idéalement elle est de l'ordre de 2 à 3 µm. La rugosité Ra est ici définie comme étant l'écart moyen, ou moyenne arithmétique des distances entre pics et creux successifs de la surface.

Un passage optionnel sous une flamme réductrice directement après dépôt de la couche d'adhésion permet d'éviter la création de trop d'oxyde et ainsi d'améliorer la mouillabilité du dépôt pour les opérations postérieures.
Différents métaux peuvent être projetés sur le panneau de verre. : Par exemple le matériau d'adhésion peut être sélectionné dans le groupe composé du cuivre et de ses alliages (par exemple avec du titane et/ou du chrome), de l'aluminium et de ses alliages, du fer et de ses alliages (tel que les alliages Fe-Ni : e.g. Fer (50-55%wt, par exemple 52%wt), Nickel (45-50%, par exemple 48%wt) tel que l'alliage 48), les alliages de fer comprenant les métaux suivant : Fer (53-55%wt, par exemple 53.5%wt), Nickel (28-30%, par exemple 29%wt) et Cobalt (16-18%, par exemple 17%wt), et le Kovar®), du platine et de ses alliages , du nickel et de ses alliages, de l'or et de ses alliages, de l'argent et de ses alliages, de l'arséniure de gallium et de l'étain ou de ses alliages. Cette liste n'étant pas exhaustive.

Cette couche d'adhésion a préférentiellement un bon accrochage au panneau de verre. Cette couche d'adhésion est idéalement suffisamment ductile pour reprendre des dilatations différentielles par rapport au substrat (panneau de verre). Pour éviter ce type de contrainte on peut utiliser un matériau ayant un coefficient d'expansion thermique (CET) sensiblement similaire à celui du panneau de verre (aux alentours de 9. 10⁻⁶ K⁻¹). Par exemple un coefficient de dilatation thermique de 3 à 23.10⁻⁶ K⁻¹ est avantageux, préférablement de 4 à 18.10⁻⁶ K⁻¹, plus préférablement de 5 à 16.10⁻⁶ K⁻¹. Le Kovar® est un matériau particulièrement avantageux au vu de sa dilatation thermique au alentour de 5.10⁻⁶ K⁻¹. Le cuivre qui peut également être utilisé présente une dilatation thermique de 16.10⁻⁶ K⁻¹.

Le Kovar® est un alliage comprenant du Fer (53.5%wt), du Nickel (29%wt), du Cobalt (17%wt), du manganèse (0.3%wt) et du silicium (0.2%wt). Un matériau avantageux est un alliage de fer comprenant les métaux suivant : Fer (53-55%wt, par exemple 53.5%wt), Nickel (28-30%, par exemple 29%wt) et Cobalt (16-18%, par exemple 17%wt).

Pour souder l'élément de joint métallique à la couche d'adhésion déposée par HVOF, on peut utiliser différentes méthodes. Une possibilité est d'utiliser une couche de soudure métallique (aussi appelé solder) (par exemple pour un brasage basse température). La couche d'adhésion est recouverte par une couche de soudure métallique. Cette étape est appelée étamage. Là couche de soudure métallique peut être déposée par dépôt au rideau, par un procédé de projection à la flamme, par HVOF, au fer à souder ou par électrodéposition, la liste n'étant pas exhaustive. Pour mouiller la couche d'adhésion, il est parfois avantageux d'appliquer un flux de brasage pour dissoudre les oxydes présents à la surface de la couche (par spray ou autre méthode). Un flux dé brasage est un mélange de produits chimiques permettant d'assurer un bon mouillage en éliminant les oxydes de la couche, en protégeant la couche d'adhésion de l'oxydation et en baissant la tension superficielle de la couche. On peut trouver le flux de brasage sous formes liquide, pâteux; gazeux ou solide. De préférence le flux de brasage utilisé est liquide. Il est de préférence adapté à la nature du matériau d'adhésion déposé sur le verre. L'homme de l'art sait quel flux de brasage est adapté à quel matériau.

Dans certains modes de réalisations de la présente invention, la couche de soudure métallique peut avoir une épaisseur pouvant aller de quelques microns à plusieurs centaines de microns. Les alliages standards pour le brasage basse température (<300°C) sont les alliages d'étain (étain-argent, étain-cuivre, étain-argent-cuivre, étain-plomb, étain-aluminium parmi d'autres).

Après étamage les surplus de flux sont de préférence nettoyés (par exemple grâce à un lavage à l'eau) pour éviter une dégradation du joint et limiter le dégazage après mise sous vide. L'élément de joint métallique est ensuite brasé à la couche d'adhésion. Le brasage peut se réaliser par une chauffe locale avec un fer à souder avec ou sans apport de matière. La charge thermique (température et temps de contact) vue par la sous-couche est de préférence limitée pour éviter de l'endommager (décollement).

Une autre possibilité est d'utiliser un brasage par induction ayant l'avantage de se réaliser sans contact avec une pièce chaude et de manière uniforme. Ce qui diminue le risque de dégradation de la couche d'adhésion. D'autres méthodes de chauffe locale peuvent aussi être utilisées pour le brasage : chauffe locale infrarouge, air chaud, brasage laser et micro-onde parmi d'autres. Le brasage ultrasons peut également être utilisé. Dans ce cas les première et seconde couches de soudure peuvent ne pas être présentent. Le élément de joint peut être mis en contact direct avec respectivement les première et seconde couches d'adhésion. Des vibrations de haute fréquence sont envoyées au élément de joint et à la couche d'adhésion par le biais d'un outil vibrant appelé sonotrode ou tête de soudure. La soudure se fait grâce à la chaleur engendrée à l'interface des deux pièces.

Pour les différentes méthodes de soudure, il est préférable que l'étamage soit mis en contact intime avec l'élément de joint métallique. Ceci peut se réaliser via une pression suffisante, de ce fait assurant la continuité du joint.

Pour faciliter le brasage, l'élément de joint peut être pré-recouvert par une couche de soudure métallique d'une épaisseur pouvant aller de quelques microns à une centaine de microns voire plus (de matière identique ou non à la soudure métallique déposée sur la couche d'adhésion).

Dans le cas du soudage par ultra sons, on peut aussi réaliser la jonction entre la couche d'adhésion et l'élément de joint métallique sans couche d'étamage.

Le procédé de soudage de l'élément de joint métallique peut se faire en une ou plusieurs étapes.

Dans l'option du soudage en une étape, l'élément de joint permettant l'étanchéité au vide se présente en une seule pièce et est brasé aux différentes couches d'adhésion respectives des différent panneaux de verre (par exemple au deux couches d'adhésion respectives des deux panneaux de verre).

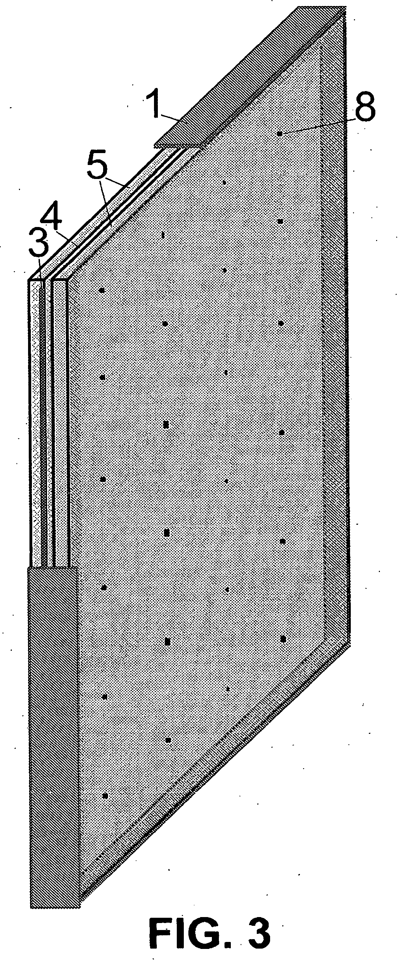

Fig. 3 et 4 montre un vitrage sous vide comprenant deux panneaux de verre 5, chacun étant recouvert sur une zone périphérique par une couche d'adhésion 3. Les deux panneaux sont assemblés de manière étanche au gaz (ici assurant le vide 4) via un joint d'étanchéité composé d'un unique feuillard métallique 1 soudé aux couches d'adhésion 3 par des soudures 2. Fig. 3 montre également des espaceurs 8 assurant une distance constante entre les deux panneaux de verre 5.

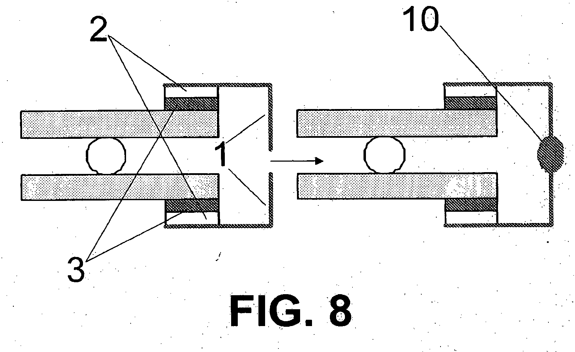

Dans l'option du soudage en plusieurs étapes (voir Fig. 8), le système de feuillards se compose de plusieurs feuillards 1. Un premier feuillard métallique 1 est soudé au premier panneau de verre 5 via une soudure 2. Un second feuillard métallique 1 est soudé au deuxième panneau de verre 5 via une autre soudure 2. Ces deux feuillards 1 distincts sont ensuite soudés entre eux via une soudure 10 pour obtenir l'étanchéité par une technique standard de soudure, par exemple au laser. Ce procédé en deux étapes peut avoir comme avantage de réaliser le scellement du vitrage sous vide sous une atmosphère à pression réduite alors que le brasage de chaque feuillard se fait au préalable à pression atmosphérique.

L'élément de joint est de.préférence un feuillard métallique. Il peut être réalisé grâce à un élément non métallique (par exemple un matériau en plastique) recouvert de métal (ce qui permet de réduire la conduction thermique par le joint) ... Par exemple, il peut être en cuivre ou alliage de cuivre, aluminium ou alliage d'aluminium, acier ou alliage d'acier, fer ou alliage de fer (par exemple en un alliage de fer comprenant les métaux suivant: Fer (53-55%wt, par exemple 53.5%wt), Nickel (28-30%, par exemple 29%wt) et Cobalt (16-18%, par exemple 17%wt) tel que le Kovar®) ou en un alliage de fer comprenant les métaux suivant: Fer (50-55%wt, par exemple 52%wt), Nickel (45-50%, par exemple 48%wt) tel que l'alliage 48. Il peut aussi être un composite de ces différentes matériaux.

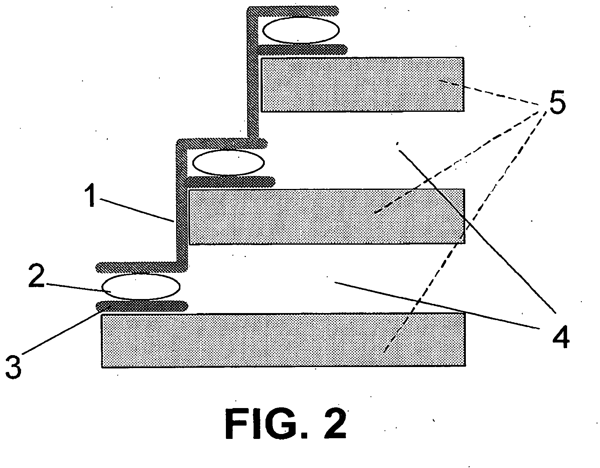

Dans le cas d'un triple vitrage sous vide (voir Fig. 2), un premier panneau de verre 5 est séparé d'un second panneau de verre 5 par un espace de vide 4, ce second panneau 5 étant séparé d'un troisième panneau 5 par un deuxième espace de vide 4.

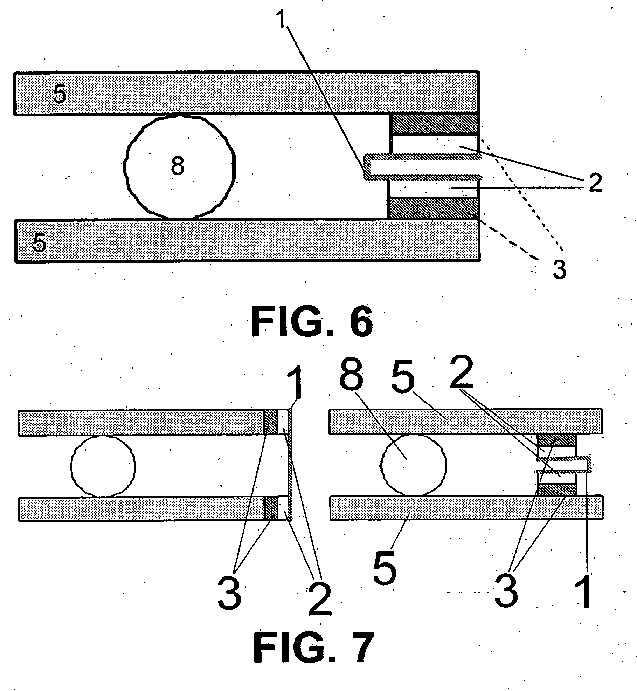

On dépose une première couche d'adhésion 3 sur une première zone périphérique du premier panneau 5, une seconde couche d'adhésion 3 sur une seconde zone périphérique du second panneau 5, une troisième couche d'adhésion 3 sur une troisième zone périphérique du troisième panneau 5. Une première option est d'utiliser un seul feuillard métallique 1 soudé à chacune des sous couches d'adhésion au moyen d'une soudure 2. Une deuxième option (non-illustrée dans la Fig . 2) est de souder un premier feuillard à la première couche d'adhésion du premier panneau, un second feuillard à la seconde couche d'adhésion du second panneau, un troisième feuillard à la troisième couche d'adhésion du troisième panneau. Dans une atmosphère à pression réduite (par exemple sous vide tel qu'un vide de 10⁻³ bar ou un vide plus poussé), le premier feuillard est ensuite soudé au second feuillard pour créer l'espace de vide entre le premier et le second panneau de verre. Le second feuillard est soudé au troisième feuillard pour créer le vide entre le deuxième et le troisième panneau. D'une manière générale, il y a plusieurs modes de réalisation pour fabriquer un joint d'étanchéité selon la présente invention. Dans n'importe quel mode de réalisation décrit ci-dessus, tout panneau de verre peut être muni d'une couche d'adhésion située sur un bord comprenant l'extrémité du panneau de verre (situation des Fig. 2-6 et 8), située sur la tranche d'un panneau de verre (situation de la Fig. 7 à gauche) ou située à proximité d'un bord, ne comprenant pas l'extrémité du panneau de verre mais couvrant une zone périphérique dudit panneau de verre, ladite zone commençant à une distance comprise entre 0 et 10 cm de ladite extrémité (situation de la Fig. 7 à droite). Dans le cas d'un double vitrage, chaque couche d'adhésion peut être déposée sur son panneau de verre de manière à être orientée vers l'intérieur du vitrage (voir Fig. 4 panneau du bas, Fig.6 les deux panneaux et Fig. 7 les deux panneaux formant le vitrage de droite), vers l'extérieur du vitrage (voir Fig. 4 panneau du haut, Fig. 5 les deux panneaux et Fig. 8, les deux panneaux) ou sur la tranche du panneau de verre. Dans le cas d'un panneau extérieur d'un triple vitrage, chaque couche d'adhésion peut être déposée sur son panneau de verre de manière à être orientée vers l'intérieur du vitrage (voir Fig. 2 panneau du bas), vers l'extérieur du vitrage (voir Fig. 2, panneau du haut) ou sur la tranche du vitrage (non représenté dans la Fig. 2 mais analogue à la situation de la Fig. 7. Dans le cas d'un panneau intérieur d'un triple vitrage, la couche d'adhésion peut soit être déposée sur la tranche du panneau de verre (situation non représentée mais analogue à la situation de la Fig. 7) soit sur une des surfaces principales du panneau de verre. Si elle est déposée sur une des surfaces principales du panneau de verre, la couche d'adhésion peut être présente sur l'une ou l'autre desdites surfaces. Dans tout les cas, les configurations suivantes sont possibles : Les couches d'adhésion de deux panneaux adjacents peuvent se faire face (situation de la Fig. 6 et de la Fig. 7 à droite) ou ne pas se faire face (situation des Fig. 2, 4, 5, 7 à gauche ou 8). Si elles ne se font pas face, les deux couches d'adhésions peuvent être orientées de telle manière à ce qu'elles se retrouvent sur des surfaces s'opposant (situation de la Fig. 5 et de la Fig. 8) ou l'une peut être orientée vers l'extérieur de l'assemblage des deux panneaux de verre et l'autre peut être orientée vers l'intérieur de l'assemblage des deux panneaux (situation des Fig. 2 et 4). Les panneaux de verres peuvent être de mêmes dimensions ou de dimensions différentes. Le bord de tout panneau de verre peut être à la même hauteur que le bord d'un panneau adjacent (situation des Fig. 5, 6 et 7). Le bord de tout panneau de verre peut également être à une hauteur différente que le bord d'un panneau adjacent, c'est à dire être décaler par rapport à la position du bord d'un panneau adjacent (cas des Fig. 2 et 4). Le système de feuillard peut être composé d'un seul feuillard (cas des Fig. 2, 4, 5, 6 et 7) ou de plusieurs feuillards reliés entre eux par soudure pendant le déroulement du procédé (cas de la Fig. 8). Le système de feuillard (ou le feuillard unique) peut prendre la forme d'un escalier (cas des Fig. 2 et 4, d'un U (voir Fig. 5, 6 et 7 droite) ou peut être plan (Fig. 7 gauche). En cas de présence d'une couche d'isolation thermique, le dépôt de la couche d'adhésion peut se faire sur la couche d'isolation thermique ou sur le côté du verre opposé à la couche d'isolation thermique ou sur la tranche du panneau de verre.

### Exemples :

Le calcul suivant est livré à titre d'exemple :
Avec une pression initiale de 10⁻⁴mbar, le débit de fuite maximum acceptable pour assurer une pression inférieur à 10⁻³mbar à l'intérieur du vitrage pendant 10 ans peut être évalué comme suit :
   Pression initiale à l'intérieur du vitrage = 10⁻⁴mbar.

La remontée en pression maximale (delta P) pour avoir une pression inférieure à 10⁻³mbar après 10ans, se calcule par 10⁻³mbar - pression initiale = 0.9 10⁻³mbar.

Pour un vitrage de 1 m² avec un espacement de 0.2mm entre les deux panneaux de verre, le volume (V) du vitrage sous vide est de 1m*1m*0.2 10⁻³m= 0.2 10⁻³ m³, ce qui correspond à 0.2 litre.

Durée de vie (D) équivalente à 10 ans est égale à 3600 secondes * 24 heures *365 jours *10 ans, ce qui équivaut à 315 360 000 secondes.

Ainsi, le taux de fuite maximale = (delta P)*V/D = 5,7 10⁻¹³ mbar.l/sec.

Deux sources de remontée en pression peuvent être observées : des fuites à travers le joint (fuites réelles) ou un dégazage des surfaces intérieures ou du joint du vitrage (fuites virtuelles).

Des tests d'étanchéité avec un détecteur de fuite à l'Hélium standard (tel que le détecteur commercialisé par la société « Pfeiffer » sous la référence « Smart Test HLT560 ») ont été réalisés par les inventeurs pour quantifier les fuites « réelles » à travers le joint. Les taux fuites mesurés selon la norme européenne EN13185, sur les vitrages avec sous-couche déposée par procédé selon un mode de réalisation de la présente invention sont inférieurs à la limite détectable par ce type d'appareillage (<5 10⁻¹⁰mbar.l/sec).

La cavité étanche délimitée par le joint d'étanchéité, d'un échantillon fabriqué avec le joint d'étanchéité selon le procédé selon l'invention est connecté au détecteur de fuite par l'intermédiaire d'un système d'aspiration adéquat. L'échantillon est plongé dans un enceinte avec une atmosphère d'Hélium (atmosphère comprenant plus de 99% d'Hélium). La cavité étanche est mise sous vide (∼5 10⁻³mbar) par la pompe du détecteur d'Hélium. Le flux d'Hélium détecté par le détecteur est de l'ordre du bruit de fond de l'appareil (<5 10⁻¹⁰mbar.l/sec). Cela prouve qu'il n'y a pas d'Hélium qui pénètre dans la cavité à travers le joint fabriqué selon la méthode décrite.

Même si ce niveau de taux de fuite n'est pas suffisant pour assurer une durée de vie du vitrage de plusieurs années, il est connu que lorsqu'aucune fuite de ce niveau n'est détectée, le joint est parfaitement étanche dans la très grande majorité des cas

Les joints avec sous-couche déposée par un procédé standard de projection à la flamme ont montré de nombreuses fuites dues à la porosité du dépôt. Les valeurs mesurées avec le détecteur à l'Hélium sont de l'ordre de 10⁻⁶ -10⁻⁷ mbar.l/sec. Ce qui est totalement insuffisant pour garder un niveau de vide fonctionnel à l'intérieur du vitrage. Avec ce taux de fuite, pour un vitrage d'une surface de 1m² et d'un espacement entre panneaux de 0.2mm, avec une pression initiale de 10⁻⁴mbar, la pression de 10⁻³mbar est atteinte après seulement 180 secondes.

Un autre aspect de la présente invention concerne un vitrage pouvant être obtenu par n'importe quel mode de réalisation du procédé de fabrication selon la présente invention.

Encore un autre aspect de la présente invention concerne un panneau de verre pouvant être obtenu par le dépôt d'une couche d'adhésion sur une zone périphérique, dans lequel ledit dépôt est réalisé avec un procédé de type projection à flamme oxygène-carburant à haute vitesse, ledit dépôt étant tel que décrit dans n'importe lequel des modes de réalisation du procédé de fabrication selon la présente invention.

## Revendications

1. Procédé de fabrication d'au moins une partie d'un joint d'étanchéité assurant l'étanchéité au gaz entre au moins un premier et un second panneau de verre (5) dans un vitrage, le procédé comprenant les étapes suivantes :
- dépôt d'une première couche d'adhésion (3) sur une première zone périphérique du premier panneau et d'une seconde couche d'adhésion (3) sur une seconde zone périphérique du second panneau (5) ;
- soudure d'un premier élément de joint métallique (1) a la première couche d'adhésion ;
- soudure d'un second élément de joint métallique (1) ou dudit premier élément de joint métallique à la seconde couche d'adhésion ;
**caractérisé en ce que** les dépôts des première et seconde couche d'adhésion (3) sont réalisés avec un procédé de type projection à flamme oxygène-carburant à haute vitesse.

2. Procédé selon la revendication 1, **caractérisé en ce que** le procédé comprend en outre une étape de dépôt sur au moins une partie d'au moins une des couches d'adhésion (3), d'une couche de soudure métallique (2) et **en ce que** au moins une des soudures d'élément de joint est une soudure par fusion de ladite couche de soudure métallique.

3. Procédé selon l'une quelconque des revendications précédentes, **caractérisé en ce que** au moins une desdites étapes de soudure est une soudure par ultrason ou par induction.

4. Procédé selon l'une quelconque des revendications précédentes, **caractérisé en ce que** le vitrage est un vitrage sous vide.

5. Procédé de fabrication d'un joint d'étanchéité selon l'une quelconque des revendications précédente dans lequel la soudure d'un premier élément de joint métallique à la première couche d'adhésion (3) et la soudure d'un second élément de joint métallique à la seconde couche d'adhésion (3) est réalisée, le procédé comprenant en outre la soudure du premier élément de joint avec le second élément de joint.

6. Procédé selon l'une quelconque des revendications précédentes, **caractérisé en ce qu'**au moins une des couches d'adhésion (3) est exposée à une flamme réductrice avant d'être soumise à ladite soudure.

7. Procédé selon l'une quelconque des revendications précédentes, **caractérisé en ce que** lesdites couches d'adhésion (3) sont formées d'un matériau d'adhésion sélectionné dans le groupe composé du cuivre et de ses alliages, de l'aluminium et de ses alliages, du fer et de ses alliages, du platine et de ses alliages, du nickel et de ses alliages, de l'or et de ses alliages, de l'argent et de ses alliages, et de l'étain ou de ses alliages.

8. Procédé selon l'une quelconque des revendications précédentes, **caractérisé en ce que** lesdites couches d'adhésion (3) sont formées d'un matériau d'adhésion ayant un coefficient de dilatation thermique de 3 à 23.10⁻⁶ K⁻¹, préférablement de 4 à 18.10⁻⁶ K⁻¹, plus préférablement de 5 à 16.10⁻⁶ K⁻¹.

9. Procédé selon l'une quelconque des revendications précédentes, comprenant en outre une étape d'exposition d'au moins une desdites couches d'adhésion (3) a un flux de brasage avant ladite soudure et/ou avant ledit dépôt d'une couche de soudure métallique.

10. Procédé selon l'une quelconque des revendications précédentes, **caractérisée en ce qu'**au moins un desdits éléments de joint métalliques (1) a une couche de soudure métallique (2) préexistant ladite soudure à une desdites couches d'adhésion.

11. Procédé selon l'une quelconque des revendications précédentes comprenant les étapes suivantes :
- dépôt dans une atmosphère à pression atmosphérique d'une première couche d'adhésion (3) sur une première zone périphérique du premier panneau et d'une seconde couche d'adhésion (3) sur une seconde zone périphérique du second panneau ;
- soudure dans une atmosphère à pression atmosphérique d'un premier élément de joint métallique (1) à la première couche d'adhésion ;
- soudure dans une atmosphère à pression atmosphérique d'un second élément de joint métallique (1), distinct du premier élément de joint métallique (1); à la seconde couche d'adhésion ; et
- soudure dans une atmosphère à pression réduite et préférablement sous vide du premier élément de joint métallique (1) avec le second élément de joint métallique (1).

12. Procédé selon l'une quelconque des revendications précédentes, **caractérisée en ce que** lesdits éléments de joint métalliques comprennent au moins un matériau sélectionné parmi le cuivre et ses alliages, l'aluminium et ses alliages, le fer et ses alliages.

13. Procédé selon l'une quelconque des revendications précédentes, **caractérisé en ce que** lesdits éléments de joint métalliques et/ou le matériau d'adhésion sont en un alliage de fer comprenant les métaux suivant: Fer (53-55%wt, par exemple 53.5%wt), Nickel (28-30%, par exemple 29%wt) et Cobalt (16-18%, par exemple 17%wt) tel que le Kovar®.

14. Procédé selon l'une quelconque des revendications précédentes, **caractérisé en ce que** ledit procédé de type projection à flamme oxygène-carburant à haute vitesse comprend les étapes suivantes :
• dans un appareil de projection comprenant des première, seconde et troisième entrées, chacune conduisant à une chambre de combustion, et une sortie, injecter sous pression un combustible et de l'oxygène par ladite première entrée,
• injecter le matériau d'adhésion dans ladite deuxième entrée ;
• réaliser une combustion entre ledit combustible et ledit oxygène pour faire fondre le matériau d'adhésion dans la chambre de combustion,
• injecter un gaz sous pression par ladite troisième entrée afin de pouvoir projeter avec une vitesse supersonique ledit matériau d'adhésion fondu hors dudit appareil via ladite sortie ; et,
• orienter la sortie dudit appareil vers l'une desdites zone périphérique, permettant ainsi la formation de l'une desdites couches d'adhésion.

15. Procédé selon la revendication 14, dans laquelle l'angle entre l'axe de ladite sortie et ledit panneau de verre est de 45° à 90 °, préférablement de 70° à 90°, plus préférablement de 75° à 90° et encore plus préférablement de 80 à 90°.

16. Procédé selon l'une quelconque des revendications 14 à 15, **caractérisé en ce que** ledit appareil et le panneau de verre sont déplacés l'un par rapport à l'autre pendant la formation desdites couches d'adhésion à une vitesse de 5 à 30 m/min, préférablement à une vitesse de 5 à 20 m/min, plus préférablement à une vitesse de 5 à 15 m/min et encore plus préférablement à une vitesse de 7 à 13 m/min.

17. Procédé selon l'une quelconque des revendications précédentes **caractérisé en ce que** les première et seconde zones périphériques des premier et second panneaux sont situées sur une tranche respectivement des premier et second panneaux.

18. Vitrage obtenu par le procédé selon l'une quelconque des revendications précédentes.

## Patentansprüche

1. Herstellungsverfahren mindestens eines Teils einer Dichtung, die die Gasdichtigkeit zwischen mindestens einer ersten und einer zweiten Glasplatte (5) in einer Verglasung gewährleistet, wobei das Verfahren die folgenden Schritte umfasst:
- Aufbringen einer ersten Haftschicht (3) auf eine erste Umfangszone der ersten Platte und einer zweiten Haftschicht (3) auf eine zweite Umfangszone der zweiten Platte (5),
- Schweißen eines ersten metallischen Dichtungselements (1) auf die erste Haftschicht;
- Schweißen eines zweiten metallischen Dichtungselements (1) oder des ersten metallischen Dichtungselements auf die zweite Haftschicht;
**dadurch gekennzeichnet, dass** das Aufbringen der ersten und zweiten Haftschicht (3) mit einem Verfahren vom Typ Hochgeschwindigkeitsflammspritzen mit Brenngas/Sauerstoff erfolgt.

2. Verfahren nach Anspruch 1, **dadurch gekennzeichnet, dass** das Verfahren ferner einen Schritt des Aufbringens auf mindestens einen Teil mindestens einer der Haftschichten (3) einer metallischen Schweißschicht (2) umfasst, und dass mindestens eine der Dichtungselementschweißungen eine Schmelzschweißung der metallischen Schweißschicht ist.

3. Verfahren nach einem der vorhergehenden Ansprüche, **dadurch gekennzeichnet, dass** mindestens einer der Schweißschritte ein Ultraschall- oder Induktionsschweißschritt ist.

4. Verfahren nach einem der vorhergehenden Ansprüche, **dadurch gekennzeichnet, dass** die Verglasung eine Vakuumverglasung ist.

5. Verfahren zur Herstellung einer Dichtung nach einem der vorhergehenden Ansprüche, bei dem das Schweißen eines ersten metallischen Dichtungselements auf die erste Haftschicht (3) und das Schweißen eines zweiten metallischen Dichtungselements auf die zweite Haftschicht (3) erfolgen, wobei das Verfahren ferner das Verschweißen des ersten Dichtungselements mit dem zweiten Dichtungselement umfasst.

6. Verfahren nach einem der vorhergehenden Ansprüche, **dadurch gekennzeichnet, dass** mindestens eine der Haftschichten (3) einer reduzierenden Flamme ausgesetzt wird, bevor sie dem Schweißen unterzogen wird.

7. Verfahren nach einem der vorhergehenden Ansprüche, **dadurch gekennzeichnet, dass** die Haftschichten (3) aus einem Haftmaterial bestehen, das aus der Gruppe ausgewählt ist, die sich aus Kupfer und seinen Legierungen, Aluminium und seinen Legierungen, Eisen und seinen Legierungen, Platin und seinen Legierungen, Nickel und seinen Legierungen, Gold und seinen Legierungen, Silber und seinen Legierungen und Zinn oder seinen Legierungen zusammensetzt.

8. Verfahren nach einem der vorhergehenden Ansprüche, **dadurch gekennzeichnet, dass** die Haftschichten (3) aus einem Haftmaterial bestehen, das einen Wärmedehnungskoeffizienten von 3 bis 23.10-6K-1, vorzugsweise von 4 bis 18.10-6K-1, noch bevorzugter von 5 bis 16.10-6K-1, hat.

9. Verfahren nach einem der vorhergehenden Ansprüche, ferner umfassend einen Schritt der Exposition mindestens einer der Haftschichten (3) einem Lötflussmittel vor dem Schweißen und/oder vor dem Aufbringen einer metallischen Schweißschicht.

10. Verfahren nach einem der vorhergehenden Ansprüche, **dadurch gekennzeichnet, dass** mindestens eines der metallischen Dichtungselemente (1) eine vor dem Schweißen auf einer der Haftschichten bestehende metallische Schweißschicht (2) hat.

11. Verfahren nach einem der vorhergehenden Ansprüche, umfassend die folgenden Schritte:
- in einer Atmosphäre bei Luftdruck Aufbringen einer ersten Haftschicht (3) auf eine erste Umfangszone der ersten Platte und einer zweiten Haftschicht (3) auf eine zweite Umfangszone der zweiten Platte;
- in einer Atmosphäre bei Luftdruck Schweißen eines ersten metallischen Dichtungselements (1) auf die erste Haftschicht;
- in einer Atmosphäre bei Luftdruck Schweißen eines zweiten metallischen Dichtungselements (1), das vom ersten metallischen Dichtungselement (1) verschieden ist, auf die zweite Haftschicht; und
- in einer Atmosphäre unter reduziertem Druck und vorzugsweise unter Vakuum Verschweißen des ersten metallischen Dichtungselements (1) mit dem zweiten metallischen Dichtungselement (1).

12. Verfahren nach einem der vorhergehenden Ansprüche, **dadurch gekennzeichnet, dass** die metallischen Dichtungselemente mindestens ein Material umfassen, das unter Kupfer und seinen Legierungen, Aluminium und seinen Legierungen, Eisen und seinen Legierungen ausgewählt ist.

13. Verfahren nach einem der vorhergehenden Ansprüche, **dadurch gekennzeichnet, dass** die metallischen Dichtungselemente und/oder das Haftmaterial aus einer Eisenlegierung sind, umfassend die folgenden Metalle: Eisen (53-55 Gew.-%, beispielsweise 53,5 Gew.-%), Nickel (28-30 Gew.-%, beispielsweise 29 Gew.-%) und Kobalt (16-18 Gew.-%, beispielsweise 17 Gew.-%), wie beispielsweise Kovar®.

14. Verfahren nach einem der vorhergehenden Ansprüche, **dadurch gekennzeichnet, dass** das Verfahren vom Typ Hochgeschwindigkeitsflammspritzen mit Brenngas/Sauerstoff die folgenden Schritte umfasst:
- in ein Spritzgerät, umfassend einen ersten, einen zweiten und einen dritten Eingang, wobei jeder zu einer Brennkammer führt, und einen Ausgang, Einspritzen eines Brennstoffes und des Sauerstoffs unter Druck durch den ersten Eingang;
- Einspritzen des Haftmaterials in den zweiten Eingang;
- Durchführen einer Verbrennung zwischen dem Brennstoff und dem Sauerstoff, um das Haftmaterial in der Brennkammer zum Schmelzen zu bringen;
- Einspritzen eines Gases unter Druck durch den dritten Eingang, um mit Überschallgeschwindigkeit das geschmolzene Haftmaterial aus dem Gerät durch den Ausgang spritzen zu können; und
- Ausrichten des Ausgangs des Geräts zu einer der Umfangszonen, wodurch die Bildung einer der Haftschichten möglich wird.

15. Verfahren nach Anspruch14, bei dem der Winkel zwischen der Achse des Ausgangs und der Glasplatte 45° bis 90°, vorzugsweise 70° bis 90°, noch bevorzugter 75° bis 90° und besonders bevorzugt 80 bis 90°, beträgt.

16. Verfahren nach einem der Ansprüche 14 bis 15, **dadurch gekennzeichnet, dass** das Gerät und die Glasplatte zueinander während der Bildung der Haftschichten mit einer Geschwindigkeit von 5 bis 30 m/min, vorzugsweise mit einer Geschwindigkeit von 5 bis 20 m/min, noch bevorzugter mit einer Geschwindigkeit von 5 bis 15 m/min und besonders bevorzugt mit einer Geschwindigkeit von 7 bis 13 m/min, verschoben werden.

17. Verfahren nach einem der vorhergehenden Ansprüche, **dadurch gekennzeichnet, dass** die erste und die zweite Umfangszone der ersten und zweiten Platte auf einem Abschnitt der ersten bzw. zweiten Platte angeordnet sind.

18. Verglasung, die durch das Verfahren nach einem der vorhergehenden Ansprüche erhalten wird.

## Claims

1. Process for manufacturing at least one portion of a tightness seal ensuring gas tightness between at least a first and a second glass panel (5) in a glazing unit, the process comprising the following steps:
- depositing a first adhesion layer (3) on a first peripheral zone of the first panel and a second adhesion layer (3) onto a second peripheral zone of the second panel (5);
- welding a first metal seal element (1) to the first adhesion layer; and
- welding a second metal seal element (1) or said first metal seal element to the second adhesion layer;
**characterized in that** the first and second adhesion layers (3) are deposited with a high-velocity oxy/fuel spraying process.

2. Process according to Claim 1, **characterized in that** the process furthermore comprises a step of depositing a metal solder layer (2) onto at least some of at least one of the adhesion layers (3), and **in that** at least one of the seal-element solder joints is a fusion weld obtained by melting said metal solder layer.

3. Process according to any one of the preceding claims, **characterized in that** at least one of said welding steps is a step of ultrasonic or induction welding.

4. Process according to any one of the preceding claims, **characterized in that** the glazing unit is a vacuum-insulated glazing unit.

5. Process for manufacturing a tightness seal according to any one of the preceding claims, wherein a first metal seal element is welded to the first adhesion layer (3) and a second metal seal element is welded to the second adhesion layer (3), the method furthermore comprising welding the first seal element to the second seal element.

6. Process according to any one of the preceding claims, **characterized in that** at least one of the adhesion layers (3) is exposed to a reducing flame before undergoing said welding.

7. Process according to any one of the preceding claims, **characterized in that** said adhesion layers (3) are formed from an adhesion material selected from the group composed of copper and its alloys, of aluminium and its alloys, of iron and its alloys, of platinum and its alloys, of nickel and its alloys, of gold and its alloys, of silver and its alloys, and of tin or its alloys.

8. Process according to any one of the preceding claims, **characterized in that** said adhesion layers (3) are formed from an adhesion material having a thermal expansion coefficient of 3 to 23×10⁻⁶ K⁻¹, preferably from 4 to 18×10⁻⁶ K⁻¹ and more preferably from 5 to 16×10⁻⁶ K⁻¹.

9. Process according to any one of the preceding claims, furthermore comprising a step of exposing at least one of said adhesion layers (3) to a brazing flux before said welding and/or before said deposition of a metal solder layer.

10. Process according to any one of the preceding claims, **characterized in that** at least one of said metal seal elements (1) has a metal solder layer (2) before said welding to one of said adhesion layers.

11. Process according to any one of the preceding claims, comprising the following steps:
- depositing, in an atmosphere at atmospheric pressure, a first adhesion layer (3) onto a first peripheral zone of the first panel and a second adhesion layer (3) onto a second peripheral zone of the second panel;
- welding, in an atmosphere at atmospheric pressure, a first metal seal element (1) to the first adhesion layer;
- welding, in an atmosphere at atmospheric pressure, a second metal seal element (1) that is distinct from the first metal seal element (1) to the second adhesion layer; and
- welding, in an atmosphere at lower pressure and preferably under vacuum, the first metal seal element (1) to the second metal seal element (1).

12. Process according to any one of the preceding claims, **characterized in that** said metal seal elements comprise at least one material selected from copper and its alloys, aluminium and its alloys, and iron and its alloys.

13. Process according to any one of the preceding claims, **characterized in that** said metal seal elements and/or the adhesion material are made of an iron alloy comprising the following metals: iron (53-55 wt%, for example 53.5 wt%), nickel (28-30%, for example 29 wt%) and cobalt (16-18%, for example 17 wt%) such as Kovar®.

14. Process according to any one of the preceding claims, **characterized in that** said high-velocity oxy/fuel spraying process comprises the following steps:
- in a spraying apparatus comprising first, second and third inlets, each leading to a combustion chamber, and one outlet, injecting under pressure a fuel and oxygen via said first inlet,
- injecting the adhesion material into said second inlet;
- combusting said fuel and said oxygen in order to melt the adhesion material in the combustion chamber,
- injecting a pressurized gas via said third inlet in order to allow said molten adhesion material to be sprayed at supersonic speed out of said apparatus via said outlet; and,
- orienting the outlet of said apparatus towards one of said peripheral zones, thus allowing one of said adhesion layers to be formed.

15. Process according to Claim 14, wherein the angle between the axis of said outlet and said glass panel is from 45° to 90°, preferably from 70° to 90°, more preferably from 75° to 90° and even more preferably from 80 to 90°.

16. Process according to either one of Claims 14 and 15, **characterized in that** said apparatus and the glass panel are moved one relative to the other during the formation of said adhesion layers at a speed of 5 to 30 m/min, preferably at a speed of 5 to 20 m/min, more preferably at a speed of 5 to 15 m/min and even more preferably at a speed of 7 to 13 m/min.

17. Process according to any one of the preceding claims, **characterized in that** the first and second peripheral zones of the first and second panels are located on one edge face of the first and second panels, respectively.

18. A glazing unit obtained by the process according to any one of the preceding claims.
